# EUROPÄISCHE PATENTSCHRIFT

(11) **EP 1 642 929 B1**
(45) Veröffentlichungstag und Bekanntmachung des Hinweises auf die Patenterteilung: **31.12.2008**
(21) Anmeldenummer: 05017937.3
(22) Anmeldetag: 18.08.2005
(51) Int. Cl.: C08L 23/00

(54) **Polymerdispersionen mit verbesserter Polyen-Fungizid-Toleranz, deren Herstellung und Verwendung zur Lebensmittelbeschichtung**
Polymer dispersions with enhanced Polyen-fungicide tolerance, method of producing them and their use in food coating
Dispersions de polymères avec tolérance accrue au fongicide polyène, leur méthode de production et leur utilisation dans l'enrobage alimentaire

(30) Priorität: 01.09.2004 DE 102004042221
(43) Veröffentlichungstag der Anmeldung: 05.04.2006
(73) Patentinhaber: Celanese Emulsions GmbH, 61476 Kronberg/Ts. (DE); CSK Food Enrichment B.V., 8938 AS Leeuwarden (NL)
(72) Erfinder: Jakob, Martin, Dr., 65779 Kelkheim (DE); Harrer, Heinrich, Dr., 47803 Krefeld (DE)
(74) Vertreter: Ackermann, Joachim

(56) Entgegenhaltungen:
- WO-A-03/054041
- JP-A- 2004 161 625
- PATENT ABSTRACTS OF JAPAN Bd. 2003, Nr. 12, 5. Dezember 2003 (2003-12-05) & JP 2004 161625 A (NOEVIR CO LTD), 10. Juni 2004 (2004-06-10)

## Beschreibung

Die vorliegende Erfindung betrifft verbesserte Polymerdispersionen zur Beschichtung von Lebensmitteln auf Basis von copolymeren Polyvinylestern und anderen Monomerbasen, welche sich durch eine verbesserte Polyen-Fungizid-Toleranz auszeichnen.

Der Einsatz von Polymerdispersionen ist zur Beschichtung von Lebensmitteln, insbesondere Hartkäse und Fleischprodukten, seit langem bekannt. Im Falle der Hartkäsebeschichtung werden die Dispersionen als Hilfsmittel für eine kontrollierte Käsereifung verwendet. Durch die Oberflächenbehandlung und das nachfolgende Auftrocknen der Dispersion wird ein gasdurchlässiger Wasserdampf-Barrierefilm generiert, der sowohl die Schimmelbildung auf dem Käse, als auch ein zu schnelles Austrocknen der Käselaibe während der Reifung verhindert. Während des Reifeprozesses durchlaufen die Käse eine mehrere Wochen bis Monate dauernde Lagerung in Feuchträumen. Dem unerwünschten Wachstum von Mikroorganismen, hauptsächlich Schimmelpilzen und Hefen, wird dabei durch eine antimikrobielle, insbesondere antifungizide Ausrüstung der Dispersionen mit speziellen Polyen-Fungiziden wie Natamycin (Pimaricin) entgegengewirkt.

Bei Natamycin handelt es ich um ein Polyen-Makrolid mit hoher fungizider Aktivität, welches aus dem Kultursubstrat von Streptomyces natalensis isolierbar ist. Es handelt sich um ein kristallines, weißes Pulver ohne Eigengeschmack oder -geruch. Es ist in diversen organischen Solventien löslich, wird aber üblicherweise als wässrige Suspension zu der Lebensmittelbeschichtungsmasse appliziert, da die Wasserlöslichkeit mit 0,005 Gewichtsprozent relativ niedrig ist.

Eine Eigenschaft von Natamycin, wie auch die verschiedener anderer Polyen-Fungizide, ist seine chemische Instabilität. Natamycin besitzt reaktive funktionelle Gruppen, an denen das Molekül leicht umgesetzt oder durch Bindungsbruch fragmentiert werden kann. Die Folgeprodukte besitzen in der Regel keine oder nur eingeschränkte mikrobiologische Aktivität. Der Abbau erfolgt nicht nur in homogener Lösung, sondern auch in Form der wässrigen Suspension. Substanzen oder Einflüsse, die zu einem Abbau der Natamycinaktivität führen, sind beispielsweise von H. Brik in Analytical Profiles of Drug Substances 10, 513-561 (1980) beschrieben worden. Zu ihnen gehören extrem saure oder basische pH-Werte, hohe Temperatur, UV- oder Gammastrahlung, Luftsauerstoff, Peroxide, Metallionen wie Fe(III), Ni(II) oder Cr(III), oder die Präsenz von Sulfiten oder Natriumformaldehydsulfoxilat.

Für den Anbieter der mit Polyen-Fungiziden ausgerüsteten Lebensmittelbeschichtungsmassen auf Polymerdispersionsbasis wäre es aufgrund des sehr hohen Preises der Handelsformen des Biozids wünschenswert, wenn eine Dispersionszusammensetzung vorliegt, welche eine hohe Biozid-Toleranz aufweist, das heißt die möglichst wenig zu einem zeitlichen Abbau des Wirkstoffs beiträgt. Da oftmals von den Herstellern der Beschichtungsmittel Mindestkonzentrationen bzw. Mindestzeiten für eine antifungizide Aktivität garantiert werden, können Kosten dadurch reduziert werden, dass eine einkalkulierte Sicherheitsmarge an teurem Überschuß-Biozid entfallen kann.

Von den beschriebenen Effekten und den offenkundigen chemischen Deaktivatoren wie Metallionen oder Peroxiden abgesehen, ist das Wechselspiel zwischen den in einem Polymerlatex vorliegenden polymeren oder niedermolekularen Komponenten bzw. der chemischen Beschaffenheit der Latexoberflächen einerseits, und dem gewöhnlich in Suspensionsform applizierten Natamycin andererseits, völlig unklar. Polymerdispersionen ein und derselben Monomerbasis können durchaus völlig unterschiedliche Fungizid-Toleranzen aufweisen.

Es finden sich im Stand der Technik schon verschiedene Ansätze, um Natamycin in Systemen, welche eine wässrige Phase enthalten, zu stabilisieren.

In US-A-5,738,888 wird ein Getränk beschrieben, welches mit einer Kombination aus Natamycin und Dimethyldicarbonat konserviert wird. Durch die Präsenz von AntiOxidantien oder Sauerstoff-Fängern wird die Natamycin-Stabilität erhöht. Dieses wird vorzugsweise durch die in den Getränken enthaltene Ascorbinsäure erzielt. Den gleichen Effekt bewirken auch Komplexierungsmittel wie EDTA, Polyphosphorsäure oder die natürlich vorkommende Zitronensäure, welche freie Schwermetallionen oder mehrwertige Ionen binden und vom Angriff auf das Biozid abhalten. Der pH-Bereich der beanspruchten Getränke liegt zwischen 2 und 6,5.

Hinweise auf eine antioxidative Stabilisierung von Natamycin im Zusammenhang mit Lebensmitteln finden sich in weiteren Druckschriften wieder, so in US-A 5,895,680, US-A 5,895,681, US-A 6,146,675 und US-A 6,156,362. In keiner der vorgenannten Schriften wird jedoch die Verwendung oder Stabilisierung von Natamycin in einer Polymerdispersion erwähnt.

WO-A-01/45,513 beschreibt ein Verfahren zum Erhalten der Aktivität von Natamycin in einer wässrigen Lösung, wobei die Lösung mit einem Chelatbildner und/oder einem Antioxidationsmittel versehen wird. Der Chelatbildner und das Antioxidationsmittel können das gleiche Mittel oder verschiedene Mittel sein. Typische Chelatbildner sind Glycin, Polyphosphat, EDTA, ein Salz von EDTA, 1,3-Diamino-2-hydroxypropan-N,N,N',N'-tetraessigsäure oder 1,3- Diaminopropan-N,N,N',N'-tetraessigsäure; typische Antioxidationsmittel sind Ascorbinsäure, Zitronensäure, Butylhydroxyanisol, Butylhydroxytoluol, ein Gallat, ein Tocoferol, Ascorbylpalmitat und/oder Calciumascorbat. Die wässrigen Lösungen können auch Latexpartikel enthalten. Beispiel 3 zeigt am Beispiel der Dispersion ®Mowilith DM2KL auf, dass offenbar die beste Wiederfindung des Biozids bei Stabilisierung der Dispersion mit Schutzkolloiden auftritt.

Die Druckschrift offenbart weiterhin in ihren Ausführungsbeispielen 4, 5 und 9 den Zusatz der Antioxidationsmittel Ascorbinsäure, Zitronensäure, Butylhydroxyanisol und Tocopherol zur Verbesserung der zeitabhängigen Restaktivität von Natamycin. Die Einsatzmengen der Antioxidationsmittel liegen bei mindestens 1000 ppm. Die Dispersionen werden mit Ammoniak zuvor auf einen pH-Wert von 5 +/- 1 eingestellt. Die in den Beispielen beschriebene Polymerdispersionen enthalten durch die Verwendung von Mowilith® DM2KL vergleichsweise hohe Mengen an Celluloseether als Schutzkolloid oder die Polymerdispersionen enthalten kein Schutzkolloid, sondern sind überwiegend durch anionische Emulgatoren stabilisiert.

Insbesondere zur Herstellung der Homopolymeren und Copolymeren von Vinylestern wie beispielsweise Vinylacetat, welche häufig als Polymerbasis für Lebensmittelbeschichtungssysteme verwendet werden, hat es sich nach PL-B-172,130 als zweckmäßig erwiesen, mit gemischten Stabilisierungssystemen zu arbeiten, wobei als Schutzkolloide Polyvinylalkohol und Celluloseether und/oder Emulgatoren nebeneinander verwendet werden.

In der laufenden Produktionspraxis tritt jedoch das Problem auf, dass auch bei überwiegend Schutzkolloid-stabilisierten Dispersionen unerklärbare Schwankungen der Biozid-Toleranz auftreten. Diese sind nicht auf die Anwesenheit von Schwermetallionen oder Restperoxiden zurückzuführen und lassen sich nur im begrenztem Umfang durch Zusatz von Antioxidationsmitteln abfedern.

Die in WO-A-01/45,513 vorgeschlagene Lösung ist nicht anwendbar, oder würde selbst im Falle einer Wirkung aufgrund der vergleichsweise hohen benötigten Mengen von >= 1000 ppm an stabilisierenden Zusätzen und den damit verbundenen Nachteilen (beispielsweise höhere Vergilbung im Falle der Verwendung von Ascorbinsäure) den hier gestellten Anforderungen nur teilweise genügen.

Aus der US-A-3,390,109 sind alkalibeständige Terpolymerzusammensetzungen bekannt, die sich als Bindemittel für Dispersionsfarben oder als Zusätze in hydraulisch abbindenden Massen eignen. In dieser Schrift findet sich weder ein Hinweis auf den Einsatz von Polyen-Fungiziden noch auf den Einsatz von Antioxidantien. Dieses ist auch nicht erforderlich, da die beschriebenen Einsatzgebiete die Verwendung dieser Zusätze nicht erfordern.

EP-A-678,241 beschreibt Suspensionen von Polyen-Fungiziden, die durch Zugabe von Verdickungsmitteln stabilisiert sind. Polymerdispersionen sind in dieser Schrift nicht erwähnt.

Der vorliegenden Erfindung lag demnach die Aufgabe zugrunde, zur Herstellung von Lebensmittelbeschichtungssystemen geeignete Polymerdispersionen bereitzustellen, die eine zu herkömmlichen Dispersionen verbesserte Polyen-Biozid-Toleranz, insbesondere gegenüber Natamycin aufweisen.

Überraschenderweise wurde nun gefunden, dass diese Aufgabe durch Polymerdispersionen gelöst wird, die mittels ausgewählter Mengen eines gemischten Stabilisierungssystems hergestellt werden, welches sich dadurch auszeichnet, dass ein Schutzkolloidsystem verwendet wird, welches entweder keine oder nur begrenzte Mengen an Celluloseether enthält, die Dispersionen geringe Mengen an Antioxidatien enthalten und in einem selektiven pH-Bereich eingestellt werden.

Gegenstand der vorliegenden Erfindung ist somit eine auf einen pH-Bereich von 4 bis 6, vorzugsweise 4,2 bis 5,5 eingestellte wässrige Polymerdispersion, enthaltend
A) 100 Gewichtsteile eines durch Emulsionspolymerisation hergestellten Homo-oder Copolymerisats,
B) 0,1 bis 15 Gewichtsteile, vorzugsweise 0,2 bis 10 Gewichtsteile, bezogen auf die Gesamtmenge der eingesetzten Monomeren, mindestens eines Schutzkolloids, vorzugsweise Polyvinylalkohol,
C) 0,1 bis 10 Gewichtsteile, vorzugsweise 0,1 bis 3,0 Gewichtsteile, bezogen auf die Gesamtmenge der eingesetzten Monomeren, mindestens eines nichtionischen Emulgators,
D) 10 bis 990 Gewichts-ppm, bezogen auf die Masse der gesamten Dispersion, mindestens eines Antioxidationsmittels, und
E) mindestens ein Polyen-Fungizid
mit der Maßgabe, dass das Schutzkolloid keinen oder bis zu 0,45 Gewichtsteile, bezogen auf die Gesamtmenge der eingesetzten Monomeren, Celluloseether aufweist.

Die Menge an Celluloseether oder an Gemisch verschiedener Celluloseether in der Komponente B) der erfindungsgemäßen Polymerdispersion beträgt 0 bis 0,45 Gewichtsteile, vorzugsweise 0 bis 0,3 Gewichtsteile bezogen auf die Gesamtmenge der eingesetzten Monomeren. Besonders bevorzugt enthält die erfindungsgemäße Polymerdispersion keinen Celluloseether.

Der Anteil an Antioxidans D) oder an Gemisch verschiedener Antioxidantien D) in der erfindungsgemäßen Polymerdispersion beträgt 10 bis 990 ppm, vorzugsweise 50 bis 900 ppm, besonders bevorzugt 100 bis 500 ppm und ganz besonders bevorzugt 100 bis 350 ppm, bezogen auf die Masse der gesamten Dispersion.

In einer weiteren Ausführungsform betrifft die Erfindung eine wässrige Polymerdispersion mit einem definierten pH-Bereich. Diese Polymerdispersion zeigt auch ohne die Anwesenheit von Antioxidationsmitteln eine überraschend hohe Polyen-Fungizid-Toleranz, insbesondere gegenüber Natamycin.

Die Erfindung betrifft daher auch eine wässrige Polymerdispersion, die auf einen pH-Bereich von 4,5 bis 5,5, vorzugsweise von 4,6 bis 5,2, eingestellt ist, enthaltend
A) 100 Gewichtsteile eines durch Emulsionspolymerisation hergestellten Homo- oder Copolymerisats,
B) 0,1 bis 15 Gewichtsteile, bezogen auf die Gesamtmenge der eingesetzten Monomeren, mindestens eines Schutzkolloids, und
C) 0,1 bis 10 Gewichtsteile, bezogen auf die Gesamtmenge der eingesetzten Monomeren, mindestens eines nichtionischen Emulgators, und
E) mindestens ein Polyen-Fungizid
mit der Maßgabe, dass die Polymerdispersion frei von Antioxidationsmittel ist und dass das Schutzkolloid keinen oder bis zu 0,45 Gewichtsteile, bezogen auf die Gesamtmenge der eingesetzten Monomeren, Celluloseether aufweist.

Der Anteil an Polyen-Fungizid E) oder an Gemisch verschiedener Polyen-Fungizide E) in den erfindungsgemäßen Polymerdispersionen beträgt typischerweise 50 bis 1000 ppm, vorzugsweise 100 bis 500 ppm, besonders bevorzugt 100 bis 400 ppm und ganz besonders bevorzugt 150 bis 350 ppm, bezogen auf die Masse der gesamten Dispersion.

Die erfindungsgemäßen Polymerdispersionen enthalten gegebenenfalls weitere für die Beschichtung von Lebensmitteln geeignete Zusätze F). Deren Anteil beträgt typischerweise bis zu 25 Gewichtsteile, vorzugsweise 0,1 bis 20 Gewichtsteile, bezogen auf die Masse der gesamten Dispersion.

Als Homo- oder Copolymerisate A) lassen sich beliebige von radikalisch polymerisierbaren Monomeren abgeleitete Verbindungen einsetzen.

In einer bevorzugten Ausführungsform bilden folgende Homo-oder Copolymerisate A) bilden über ihre Hauptmonomere die Basis für die erfindungsgemäße Dispersion:
A1) ein Copolymerisat aus Vinylestern von aliphatischen, gesättigten Carbonsäuren, vorzugsweise Fettsäuren mit einer Kettenlänge von C₁-C₁₈, und Maleinsäureestern und/oder Fumarsäureestern von einwertigen aliphatischen Alkoholen mit einer Kettenlänge von C₁-C₁₈,
A2) ein Homo- oder Copolymerisat aus Vinylestern von aliphatischen, gesättigten Carbonsäuren, vorzugsweise Fettsäuren mit einer Kettenlänge von C₁-C₁₈,
A3) ein Copolymerisat aus Vinylestern von aliphatischen, gesättigten Carbonsäuren, vorzugsweise Fettsäuren mit einer Kettenlänge von C₁-C₁₈ und alpha-Olefinen mit 2 bis 8 C-Atomen, insbesondere Ethylen,
A4) ein Homo-oder Copolymerisat von (Meth-)acrylsäurealkylestern mit 1 bis 18 Kohlenstoffatomen in der Alkylkette, oder ein Copolymerisat dieser (Meth-)acrylsäurealkylester mit beliebigen Kombinationen der unter A1) bis A3) genannten Monomeren.

Bei den Vinylestern von aliphatischen gesättigten Carbonsäuren der Kettenlänge C₁₋C₁₈ des Copolymers A1), A2) und A3) handelt es beispielsweise um Vinylformiat, Vinylacetat, Vinylpropionat, Vinylbutyrat, Vinylisobutyrat, Vinylpivalat, Vinyl-2-ethylhexanoat, Vinylester von α-verzweigten Carbonsäuren mit 9 bis 11 Kohlenstoffatomen im Säurerest (®Versaticsäuren), sowie die die Vinylester der Laurin-, Palmitin-, Myristin- und Stearinsäure.

Die Verwendung der Vinylester aliphatischer Fettsäuren ist bevorzugt, darunter insbesondere Vinylacetat. Die Vinylester des Copolymers A1), A2) und A3) können im auch in Kombination von zwei oder mehreren davon nebeneinander vorliegen.

Besonders bevorzugt werden die Vinylester der Gruppe A1) eingesetzt.

Bei den Maleinsäure- und Fumarsäureestern von einwertigen aliphatischen Alkoholen der Kettenlänge C₁-C₁₈ des Copolymers A1) handelt es sich um solche von gesättigten Alkoholen der Kettenlänge C₁-C₁₈ oder um solche mit einwertigen aliphatischen ungesättigten Alkoholen der Kettenlänge C₃-C₁₈, vorzugsweise jedoch um solche mit gesättigten Alkoholen der Kettenlänge C₄-C₈, insbesondere um Dibutylmaleinat oder um Di-2-ethylhexylmaleinat und/oder -fumarat. Die Verwendung von Dibutylmaleinat und/oder -fumarat ist besonders bevorzugt.

Bei den alpha-Olefinen mit 2 bis 8 C-Atomen des Copolymers A3) handelt es sich um verzweigte oder um geradkettige alpha-Olefine, beispielsweise um Prop-1-en, But-1-en, Pent-1-en, Hex-1-en, Hept-1-en, Oct-1-en und insbesondere um Ethylen.

Bei den (Meth-)acrylsäurealkylestern des Copolymers A4) handelt es sich um (Meth)-acrylsäurealkylester mit 1 bis 18 Kohlenstoffatomen in der Alkylkette. Bei den Acrylaten handelt es sich typischerweise um Ester der Acrylsäure mit Alkoholen wie insbesondere Methanol, Ethanol, n-Butanol, iso-Butanol oder 2-Ethyl-hexanol. Bevorzugte Monomere dieses Typs sind Acrylsäuremethyl-, -ethyl-, -n-butyl-, -isobutyl und -2-ethylhexylester. Bei den Methacrylaten handelt es sich typischerweise um Ester der Methacrylsäure mit Alkoholen wie insbesondere Methanol, Ethanol, n-Butanol, iso-Butanol oder 2-Ethyl-hexanol. Bevorzugte Monomere dieses Typs sind Methacrylsäuremethyl-, -ethyl-, -n-butyl-, -isobutyl und -2-ethylhexylester.

Die vorgenannten Copolymere A1) bis A4) können zur Einstellung spezifischer Eigenschaften und zur zusätzlichen Stabilisierung weitere Comonomere enthalten. Hierzu sind beliebige Comonomere einsetzbar, die nicht den Gruppen A1), A2), A3) oder A4) angehören.

Beispiele hierfür sind Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acrylsäureester mit Dimethylaminoethanol, sowie (Meth)acrylsäureester mit zweiwertigen aliphatischen Alkoholen der Kettenlänge C₂-C₁₈, bei denen nur eine Alkoholgruppe verestert ist. Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Weiterhin sind verwendbar ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden. Beispiele dafür sind Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze oder (Meth)acrylsäureester von Sulfoalkanolen, beispielsweise Natrium-2-sulfoethylmethacrylat. Besonders geeignet sind Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze.

Weitere Beispiele für verwendbare Comonomere sind Ester aliphatischer Carbonsäuren der Kettenlänge C₃-C₁₂ mit ungesättigten Alkoholen der Kettenlänge C₃-C₁₈, Vinylchlorid, Vinylidenchlorid, Acrylnitril und Methacrylnitril, Butadien, Isopren, C₉-C₁₆ alpha-Olefine, 2-Chlorbutadien, 2,3-Dichlorbutadien, Tetrafluorethylen, Styrol, Vinylether von einwertigen aliphatischen gesättigten Alkoholen der Kettenlänge C₁-C₁₈, Divinyl- und Diallylester von gesättigten und ungesättigten aliphatischen Dicarbonsäuren der Kettenlänge C₃-C₁₈, Vinyl- und Allylester der Acrylsäure und Crotonsäure und Triallylcyanurat.

Die Menge dieser Monomeren in den Copolymeren A1) bis A4), gegebenenfalls in Kombination mit weiteren Comonomeren aus dieser Monomergruppe, beträgt typischerweise 0 bis 15 Gew.-%, vorzugsweise 0 bis 10 Gew.-%, jeweils bezogen auf die Summe der eingesetzten Monomeren.

Als Schutzkolloid B), also als polymerer Stabilisator, eignen sich Polyvinylalkohol, Gelatine, Kasein, Stärke, Gummi arabicum, modifizierte Stärken wie Hydroxyethylstärke, Natriumalginat, sowie Homo- oder Copolymerisate mit Monomereinheiten abgeleitet von den in den Gruppen der Polymerisate A1) bis A4) genannten Monomeren, z.B. Vinylester, (Meth)acrylsäuren und/oder -ester sowie N-Vinylamide, einschließlich der N-Vinyllactame und/oder die wasserlöslichen Salze dieser Homo- oder Copolymeren. Beispiele für (Meth)acrylsäuren sind Polyacrylsäure und/oder Polymethacrylsäure. Beispiele für N-Vinylamide sind Polyvinylpyrrolidon und N-Vinylacetamid.

Das bevorzugte Schutzkolloid B) ist Polyvinylalkohol.

Geeigneter Polyvinylalkohol besitzt Hydrolysegrade von 60 bis 100 mol-% und Viskositäten der 4 %igen wässrigen Lösungen bei 20 °C von 2 - 70 mPa*s.

Der Begriff "Polyvinylalkohol" im Sinne der Erfindung beinhaltet im weitesten Sinn formale Copolymere des Vinylalkohols mit anderen Monomereinheiten, wobei diese nicht ausdrücklich auf Vinylacetateinheiten in teilverseiften Polyvinylalkoholen beschränkt sind.

Beispiele für solche Verbindungen sind Copolymere des Vinylalkohols mit Isopropenylalkohol bzw. Isopropenylacetat oder mit Aldehyden wie Formaldehyd oder Butyraldehyd polymeranalog umgesetzte d. h. teilacetalisierte Polyvinylalkohole.

Es kann außerdem vorteilhaft sein, Gemische von Polyvinylalkoholen verschiedener Molekulargewichte und/oder Hydrolysegrade einzusetzen, um die Viskosität gezielt steuern zu können, oder wie in der WO-A-03/54,041 beschrieben, Eigenschaften gezielt einzustellen.

Die genannten Schutzkolloide können selbstverständlich auch in Form von Gemischen verwendet werden. Ist dies der Fall, werden bevorzugt Gemische aus Polyvinylalkohol und Polyvinylpyrrolidon verwendet.

Die verwendete Menge der Schutzkolloide, bezogen auf das Copolymer A), beträgt 0,1 bis 15 Gewichtsteile, vorzugsweise 0,2 bis 10 Gewichtsteile.

Bei den gegebenenfalls eingesetzten Celluloseethern handelt es sich typischerweise um an sich bekannte Celluloseetherderivate, die bekanntermaßen als Schutzkolloide eingesetzt werden. Beispiele dafür sind Hydroxyethyl-, Methylhydroxyethyl-, Methyl-, Propyl-, Natriumcarboxymethyl-, Allyl-, Allylhydroxyethyl- oder Allylglycidylhydroxyethyl-cellulosen.

Die eingesetzten Mengen dieser Verbindungen sind für beide Varianten der erfindungsgemäßen Polymerdispersionen als kritisch anzusehen. Im Sinne der Erfindung hat es sich als erforderlich erwiesen, höchstens 0,45 Gewichtsteile, vorzugsweise 0 bis 0,3 Gewichtsteile, bezogen auf 100 Teile der Gesamtmenge der eingesetzten Monomeren zu verwenden.

Besonders bevorzugt ist es, wenn keine Celluloseether im Schutzkolloidsystem verwendet werden.

Als nichtionische Emulgatoren C) eignen sich insbesondere Acyl-, Alkyl-, Oleyl- und Alkylaryloxethylate. Diese Produkte sind beispielsweise im Handel unter der Bezeichnung Genapol® oder Lutensol® erhältlich. Hierunter fallen beispielsweise ethoxilierte Mono-, Di- und Tri-Alkylphenole (EO-Grad: 3 bis 50, Alkylsubstituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-8)ethoxilate, C₁₃C₁₅₋Oxoalkohol(3-30)ethoxilate, C₁₆C₁₈-Fettalkohol(11-80)ethoxilate, C₁₀-Oxoalkohol(3-11)ethoxilate, C₁₃-Oxoalkohol(3-20)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-20)-Ether von Oleylalkohol sowie die Polyethenoxid(4-20)-Ether von Nonylphenol. Besonders geeignet sind die Polyethylenoxid(4-20)-Ether von Fettalkoholen, insbesondere von Oleylalkohol. An nichtionischen Emulgatoren werden 0,1 bis 10 Gewichtsteile, vorzugsweise 0,5 bis 5,0 % bezogen auf das Copolymer A) verwendet. Es lassen sich auch Gemische von nichtionischen Emulgatoren einsetzen.

Zur weiteren Verbesserung der Stabilität ist es auch möglich, weitere, in diesem Fall ionische, vorzugsweise anionische Stabilisatoren als Co-Emulgator mitzuverwenden.

Beispielhaft genannt seien Natrium-, Kalium- und Ammoniumsalze von geradkettigen aliphatischen Carbonsäuren der Kettenlänge C12-C20, Natriumhydroxyoctadecansulfonat, Natrium-, Kalium- und Ammoniumsalze von Hydroxyfettsäuren der Kettenlänge C12-C20 und deren Sulfierungs- und/oder Acetylierungsprodukte, Alkylsulfate, auch als Triethanolaminsalze, Alkyl-(C10-C20)-sulfonate, Alkyl(C10-C20)-arylsulfonate Dimethyldialkyl(C8-C18)-ammoniumchlorid, und ihre Sulfierungsprodukte, Alkalisalze der Sulfobernsteinsäureester mit aliphatischen gesättigten einwertigen Alkoholen der Kettenlänge C4-C16, Sulfobernsteinsäure-4-Ester mit Polyethylen-glykolethem von einwertigen aliphatischen Alkoholen der Kettenlänge C10-C12 (Di-Natriumsalz), Sulfobernstein-säure-4-Ester mit Polyethylenglykolnonyl-phenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium sowie Natriumlaurylsulfat, oder ethoxyliertes Natriumlaurylethersulfat (EO-Grad 3). Es lassen sich auch Gemische von ionischen Emulgatoren einsetzen.

Die Menge der Komponente C), bezogen auf 100 Gewichtsteile Monomere der Copolymergruppe A), beträgt 0,1 bis 10 Gewichtsteile, vorzugsweise 0,1 bis 5 Gewichtsteile, insbesondere 0,1 bis 3,0 Gewichtsteile.

Gegebenenfalls anwesende zusätzliche ionische Emulgatoren werden in Bezug auf die nichtionischen Emulgatoren im Unterschuss eingesetzt. Typischerweise beträgt der Anteil an ionischen Emulgatoren, bezogen auf die Gesamtmenge der eingesetzten Emulgatoren, bis zu 40 Gew. %, vorzugsweise weniger als 10 Gew. %.

Besonders bevorzugt werden neben nichtionischen Emulgatoren C) keine weiteren ionischen Emulgatoren eingesetzt.

Komponente D) in der ersten Variante der erfindungsgemäßen Polymerdispersion ist ein Antioxidans oder ein Gemisch von Antioxidantien. Darunter sind Verbindungen zu verstehen, die im eingestellten pH-Bereich ein Redoxpotential von < 0 mV, vorzugsweise von < 200 mV aufweisen.

Bevorzugte Komponenten D) sind Ascorbinsäure, deren Vorstufen und/oder Derivate (wie Ester oder Salze), Hydroxycarbonsäuren oder deren Derivate (wie deren Ester oder Salze) und/oder substituierte Phenole. Beispiele für besonders bevorzugte Komponenten D) sind Ascorbinsäure, Isoascorbinsäure, Weinsäure oder Zitronensäure, die Alkali- oder Erdalkalisalze dieser Säuren, Gluconsäure, Ascorbylpalmitat, Ascorbylstearat, Butylhydroxyanisol, Butylhydroxytoluol, alpha-Tocopherol, gamma-Tocopherol oder delta-Tocopherol, Retinol, Propyl-, Octyl- oder Dodecylgallat.

Die erfindungsgemäßen Dispersionen besitzen gegebenenfalls weitere, für die Herstellung von Lebensmittelbeschichtungsmassen geeignete Zusätze F). Hierunter fallen beispielsweise Verbindungen, welche als Verdicker geeignet sind.

In erste Linie ist hier wiederum Polyvinylalkohol und Celluloseether zu nennen, die zusätzlich zu den als Schutzkolloid eingesetzten Verbindungen nach der Beendigung der Polymerisation oder bevorzugt nach Entmonomerisierung zur Einstellung einer geeigneten Applikationsviskosität zugesetzt werden. Obwohl der nachgegebene Celluloseether die Polyen-Fungicid-Toleranz weniger beeinftusst als der als Schutzkolloid verwendete, ist die Art und die Menge dieser Zusätze durch Messung der Wiederfindungsraten des Polyen-Fungicids zu überprüfen.

Weitere Zusätze F) sind beispielsweise alle unter B) genanten Verbindungen.

Als Zusätze F) eignen sich selbstverständlich auch niedermolekulare Substanzen wie Harnstoff, Borsäure, Stabilisatoren wie Neutralisierungsmittel und Komplexbildner.

Die Einsatzmengen der Erstgenannten werden durch die im Rahmen dieser Erfindung einzuhaltenden pH-Werte bestimmt. Beispielhaft genannt für diese Gruppe an Zusätzen seien Alkali- Ammonium-, Calciumhydroxide, -carbonate, -phosphate, Alkalisalze der Ethylendiamintetraessigsäure und N-Hydroxyethylethylendiamin-triessigsäure, sowie Natriumacetat und Phosphorsäure, Ameisensäure, Ammoniumchlorid, Natriumsulfat, Homopolymerisate aus 2-Acrylamido-2-methylpropansulfon-säure und ihre Natrium-, Kalium- und Ammoniumsalze.

Weiterhin Zusätze der Gruppe F) umfassen andere Konservierungsmittel, die in den einschlägigen Verordnungen zu lebensmittelrechtlichen Vorschriften über Zusatzstoffe für Käse oder anderen zu beschichtenden Lebensmitteln zugelassen sind. Beispiele hierfür sind die freie Sorbinsäure und Benzoesäure, deren Salze und Derivate der p-Hydroxybenzoesäure.

Eine andere Gruppe bilden die in den einschlägigen Positivlisten zugelassenen Lebensmittelzusatzfarbstoffe, wie Karoten (E 160a), Annato (E 160b), Carbo Medicinalis vegetabilis (E 153), Titandioxid (E 171), Tartrazin (E 102), Chinolingelb (E 104), Sonnengelb FCF (E 110), Cochenillerot A (E 124), Indigotin (E 132), Brillantschwarz BN (E 151) oder Litholrubin BK (E 180).

Die erfindungsgemäßen Polymerdispersionen weisen als Komponente E) ein Polyen-Fungizid oder ein Gemisch von Polyen-Fungiziden auf. Darunter ist bevorzugt Natamycin zu verstehen. Es können aber auch chemisch ähnliche Biozide eingesetzt werden. Beispiele dafür sind Lucensomycin, Arenomycin B, Tetramycin, Tetrin A, Tetrin B, Amphotericin B und/oder Nystatin. Durch die stofflichen Charakteristika der erfindungsgemäßen Polymerdispersion wird eine gleichförmig hohe Polyen-Fungizid-Toleranz, insbesondere eine hohe Natamycin-Toleranz erreicht. Diese äußert sich in konstant hohen Wiederfindungsraten des Biozids in Abhängigkeit von der Zeit.

Die erste Variante der erfindungsgemäßen Polymerdispersionen wird in einem pH-Bereich zwischen 4 und 6 eingestellt. Dieser pH-Bereich kann schon nach der Polymerisation vorliegen, oder er wird durch nachträglichen Zusatz der bereits genannten Hilfsstoffe F) eingestellt.

Die zweite Variante der erfindungsgemäßen Polymerdispersionen wird in einem pH-Bereich zwischen 4,5 und 5,5 eingestellt. Dieser pH-Bereich kann ebenfalls schon nach der Polymerisation vorliegen, oder er wird durch nachträglichen Zusatz der bereits genannten Hilfsstoffe F) eingestellt.

Ein besonders bevorzugter Bereich für die erste Variante liegt zwischen 4,2 und 5,5.

Ein besonders bevorzugter Bereich für die zweite Variante liegt zwischen 4,6 und 5,2.

Die Erfindung betrifft auch die Vorprodukte der Zusammensetzungen der Variante I. Dabei handelt es sich um Zusammensetzungen enthaltend Komponenten A), B), C) und D).

Der Feststoffgehalt der erfindungsgemäßen wässrigen Polymerdispersionen beträgt 20 bis 70 Gew.-%, vorzugsweise 30 bis 65 Gew.-%, und besonders bevorzugt 40 bis 60 Gew.-%.

Die minimale Filmbildetemperatur der erfindungsgemäßen Polymerdispersionen liegt typischerweise unter 25 °C, vorzugsweise unter 15 °C. Die minimale Filmbildetemperatur kann durch Zusatz an sich bekannter Koaleszenzmittel modifiziert und gezielt eingestellt werden.

Gegenstand dieser Erfindung ist weiterhin ein Verfahren zur Herstellung der erfindungsgemäßen Polymerdispersionen mittels radikalischer Emulsionspolymerisation.

Die Durchführung einer radikalisch initiierten wäßrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987].

Die Erfindung betrifft ein Verfahren zur Herstellung der ersten Variante von wässrigen Polymerdispersionen umfassend die Schritte:
i) radikalische Emulsionspolymerisation mindestens eines ethylenisch ungesättigten Monomeren zur Herstellung eines Homo- oder Copolymerisats A), in Gegenwart von
ii) 0,1 bis 15 Gewichtsteilen, vorzugsweise 0,2 bis 10 Gewichtsteilen, mindestens eines Schutzkolloids, vorzugsweise Polyvinylalkohol, und
iii) 0,1 bis 10 Gewichtsteilen, vorzugsweise 0,1 bis 3,0 Gewichtsteilen, mindestens eines nichtionischen Emulgators,
iv) gegebenenfalls Zugabe mindestens eines Antioxidationsmittels in einer Menge, dass die Konzentration an Antioxidationsmittel in der Polymerdispersion 10 - 990 Gewichts-ppm, bezogen auf die Masse der gesamten Dispersion, beträgt,
v) gegebenenfalls Einstellen der erhaltenen wässrigen Polymerdispersion auf einen pH-Bereich zwischen 4 und 6,
vi) gegebenenfalls Zugabe von weiteren für die Beschichtung von Lebensmitteln geeigneten Zusätzen F), und
vii) Zugabe von Polyen-Fungizid,
mit der Maßgabe, dass das verwendete Schutzkolloid keinen oder bis zu 0,45 Gewichtsteile, bezogen auf die Gesamtmenge der eingesetzten Monomeren, Celluloseether aufweist.

Die Erfindung betrifft weiterhin ein Verfahren zur Herstellung der zweiten Variante von wässrigen Polymerdispersionen umfassend die Schritte:
i) radikalische Emulsionspolymerisation mindestens eines ethylenisch ungesättigten Monomeren zur Herstellung eines Homo- oder Copolymerisats A), in Gegenwart von
ii) 0,1 bis 15 Gewichtsteilen, vorzugsweise 0,2 bis 10 Gewichtsteilen, mindestens eines Schutzkolloids, vorzugsweise Polyvinylalkohol, und
iii) 0,1 bis 10 Gewichtsteilen, vorzugsweise 0,1 bis 3,0 Gewichtsteilen, mindestens eines nichtionischen Emulgators,
iv) gegebenenfalls Zugabe mindestens eines Antioxidationsmittels in einer Menge, dass der Gehalt an nicht umgesetzten Monomeren und/oder an oxidierenden Komponenten in der in der Polymerdispersion unter Abbau der Menge an Antioxidationsmittel verringert wird,
v) gegebenenfalls Einstellen der erhaltenen wässrigen Polymerdispersion auf einen pH-Bereich zwischen 4,5 und 5,5,
vi) gegebenenfalls Zugabe von weiteren für die Beschichtung von Lebensmitteln geeigneten Zusätzen, und
vii) Zugabe von Polyen-Fungizid,
mit der Maßgabe, dass die Menge an Antioxidationsmittel so gewählt wird, dass die Polymerdispersion nach Durchführung von Schritt iv) frei von Antioxidationsmitteln ist und dass das verwendete Schutzkolloid keinen oder bis zu 0,45 Gewichtsteile, bezogen auf die Gesamtmenge der eingesetzten Monomeren, Celluloseether aufweist.

Diese Polymerisation kann im Batchverfahren, im Zulaufverfahren, oder kombinierten Batch/Zulauf-Verfahren oder in kontinuierlichen Schlaufenreaktoren oder Rührkesselkaskaden durchgeführt werden.

Vorzugsweise wird jedoch im kombinierten Batch/Zulauf-Verfahren oder besonders bevorzugt, im Zulaufverfahren gearbeitet, wobei üblicherweise ein Teil der Monomeren (1 bis 15 Gew.-%) zum Starten der Polymerisation vorgelegt werden.

Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen eine Saatpolymerisation durchzuführen.

Als radikalische Initiatoren können die üblichen für solche Polymerisationen bekannten Verbindungen eingesetzt werden. Beispiele dafür sind:Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge C₈-C₁₂, Tertiärbutylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Reduktionsmittel mitverwendet werden. Die Reduktionsmittel können von den unter D) genannten Verbindungen (Antioxidantien) gleich oder verschieden sein. Als Reduktionsmittel können weiterhin Alkalisalze der Hydroxymethylsulfinsäure, der Sulfinatohydroxyessigsäure, Hydroxylamin und Salze des Hydroxylamins, Natriumbisulfit, Natriumsulfit, Ammoniumbisulfit, Natriumdithionit, mitverwendet werden. Hierbei ist jedoch prinzipiell die Empfindlichkeit des Nataymcins gegenüber Schwefelnucleophilen zu berücksichtigen. Die Komponenten des Initiator- bzw. Redoxsystems können jeweils für sich oder kombiniert vor dem Start der Polymerisation vorgelegt, dosiert, oder partiell vorgelegt und partiell dosiert werden oder in Form von Portionen zugegeben werden.

Vorzugsweise werden wasserlösliche Persulfate, insbesondere Ammoniumpersulfat oder Natriumpersulfat oder Wasserstoffperoxid zum Starten der Polymerisation verwendet.

Zur Regelung des Molekulargewichts können Substanzen, wie beispielsweise Mercaptane der Kettenlänge C₁₀-C₁₄, Buten-(I)-ol-(3), Natriumdialkyldithiocarbamat oder Diisopropylxanthogendisulfid bei der Polymerisation mitverwendet werden.

Das zur Stabilisierung verwendete Schutzkolloid oder die Schutzkolloide B), vorzugsweise der Polyvinylalkohol, kann entweder zu Beginn der Polymerisation komplett vorgelegt oder partiell vorgelegt und partiell dosiert oder komplett während der Polymerisation zudosiert werden, wobei allerdings in einer bevorzugten Ausführungsform die Komponente B) komplett vorgelegt wird.

Der zur Stabilisierung gegebenenfalls mitverwendete Celluloseether kann ebenfalls entweder zu Beginn der Polymerisation komplett vorgelegt oder partiell vorgelegt und partiell dosiert oder komplett während der Polymerisation zudosiert werden.

Der oder die zur Stabilisierung mitverwendete(n) nichtionische Emulgator oder die nichtionischen Emulgatoren C) können ebenfalls entweder zu Beginn der Polymerisation komplett vorgelegt oder partiell vorgelegt und partiell dosiert oder komplett während der Polymerisation zudosiert werden. Dasselbe gilt prinzipiell für die Mitverwendung eines oder mehrerer weiterer ionischer Coemulgatoren.

Die Polymerisationstemperatur bewegt sich typischerweise im Bereich von 20 bis 120°C, vorzugsweise im Bereich von 30 bis 110°C und ganz besonders bevorzugt im Bereich von 45 bis 95°C.

Nach Abschluss der Polymerisation kann zur Entmonomerisierung und zur Entfernung von oxidierenden Bestandteilen eine weitere, vorzugsweise chemische Nachbehandlung, insbesondere mit Redoxkatalysatoren, wie zum Beispiel Kombinationen aus den obengenannten Oxidationsmitteln und Reduktionsmitteln, insbesondere den erfindungsgemäßen unter D) genannten Antioxidationsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm gestattet.

Nach weitgehendem Abschluss der Polymerisation, vorzugsweise nach Abschluss der chemischen und/oder physikalischen Entmonomerisierung und Entfernung oxidierender Bestandteile, erfolgt die Zugabe der zur Beschichtung von Lebensmitteln geeigneten Zusätze F) und bei der ersten Variante des Verfahrens erfolgt der Zusatz des erfindungsgemäß eingesetzten Antioxidationsmittels D). Bei der zweiten Variante des Verfahrens ist darauf zu achten, dass die Polymerdispersion nach der Entmonomerisierung und Entfernung oxidierender Bestandteile kein Antioxidans mehr aufweist. Dieses bedeutet, dass mit herkömmlichen Nachweisverfahren, mit denen bis zu 10 ppm Antioxidans nachgewiesen werden können, kein Antioxidans in der Polymerdispersion mehr nachgewiesen werden kann. Die Reihenfolge der Zugaben ist prinzipiell nicht kritisch, sollte aber auf die Kompatibilität der Komponenten und insbesondere auf den erfindungsgemäß einzustellenden Endwert des pH-Wertes ausgelegt sein. Wird beispielsweise eine Säure als Antioxidationsmittel zugesetzt, sollte die Zugabe eines alkalischen pH-Stellmittels nach diesem Schritt erfolgen. Der Zusatz des Antioxidationsmittels kann dann entfallen, wenn bereits aus der Polymerisation bzw. der chemischen Entmonomerisierung eine ausreichende Restkonzentration an freiem Antioxidationsmittel vorliegt. Dieses ist dann der Fall, wenn sehr hohe stöchiometrische Überschüsse an Antioxidationsmittel bezogen auf das Oxidationsmittel verwendet werden.

Es hat sich jedoch als vorteilhaft erwiesen, wenn das oder die Antioxidationsmittel D) in Form einer definierten Nachgabe erst nach weitgehendem Abschluss der Polymerisation, vorzugsweise nach Abschluss der chemischen und/oder physikalischen Entmonomerisierung zugesetzt wird/werden. Die Zugabe dieser Komponente erfolgt dann in der Regel bei tieferer Temperatur als bei derjenigen, die bei der chemischen Entmonomerisierung verwendet wird.

Die erfindungsgemäßen wässrigen Polymerdispersionen führen über ihre spezifische Stoffauswahl zu einer hohen Polyen-Fungizid-Toleranz. Auf Grund des extrem hohen Preises dieser Produkte muss den erfindungsgemäßen Beschichtungsmitteln daher üblicherweise kein oder nur ein reduzierter Sicherheitsüberschuss an Polyen-Fungizid zugesetzt werden. Auch bedingt durch die Tatsache, dass Aufwendungen zur Verbesserung der Polyen-Fungizid-Beständigkeit nicht mehr benötigt werden, führen sie zu einer deutlichen Kosteneinsparung.

Des weiteren wird durch die signifikant niedrigere Polyen-Fungizid-Konzentration das Risiko der Bildung resistenter Schimmel- oder Hefenkulturen vermieden, welche ansonsten bei ihrem Auftreten in z.B. Produktionsstätten für Hartkäse zu kostspieligen Dekontaminationsverfahren führen.

Die mit den Polyen-Fungiziden, insbesondere mit Natamycin ausgerüsteten Polymerdispersionen eigenen sich sowohl als Hilfsmittel für die Käsereifung, als auch als Beschichtungsmittel und/oder als Verpackungsmaterial für Lebensmittel aller Art, insbesondere für Fleisch- und Wurstwaren, für Gemüse, insbesondere Stangengemüse, für Früchte, vorzugsweise Hartschalenfrüchte, insbesondere Citrusfrüchte, für Saatgut und für Weichkäse.

Darüber hinaus eignen sie sich zur Herstellung von Beschichtungen als Hilfsmittel bei der Herstellung von Lebensmitteln, insbesondere von Käse oder allgemein dort, wo die vorherrschenden Umweltbedingungen zu einem erhöhten Befall an Schimmelpilzen und Hefen führen.

Diese Verwendungen sind ebenfalls Gegenstand der vorliegenden Erfindung.

Die nachfolgenden Beispiele dienen der Erläuterung der Erfindung. Die in den Beispielen angegebenen Teile und Prozente beziehen sich auf das Gewicht, soweit nicht anders vermerkt.

### Dispersion A

In einem zylindrischen Glasrührkesselreaktor mit Heiz/Kühlbad, Ankerrührer, Dosiervorrichtungen und Rückflusskühler wurden in 115 Teilen entionisiertem Wasser 3,5 Teilen ® Mowiol 40-88 und 3,5 Teile ® Mowiol 26-88 (teilverseifter Polyvinylalkohol der Firma Kuraray Specialties Europe vom Hydrolysegrad 88 Mol% und einer mittleren Viskosität von ca. 40 bzw. 26 mPa·s, gemessen in 4 %-iger wässriger Lösung bei 20 °C) sowie 0,5 Teile ®Genapol O-200 (ethoxilierter Oleylalkohol der Firma Clariant GmbH mit einem mittleren Ethoxilierungsgrad von 20 mol Ethylenoxid) zusammen mit 0,11 Teilen wasserfreiem Natriumacetat suspendiert und anschließend bei einer Temperatur von mindestens 80 °C gelöst. Diese Lösung wurde über Nacht auf Raumtemperatur abgekühlt. Vor der Polymerisation wurden 0,11 Teile Eisessig zugesetzt und der Versuchsansatz aufgeheizt. Bei 65 °C wurden 5,7 % von insgesamt 100 Teilen Monomergemisch, bestehend aus 70 Teilen Vinylacetat und 30 Teilen Di-n-butylmaleinat zum Starten der Polymerisation innerhalb von 10 min zugegeben. Der Reaktionsstart erfolgte durch Zusatz von 0,2 Teilen Ammoniumperoxodisulfat in 2,05 Teilen deionisiertem Wasser. Nach der Anpolymerisation (ca. 15 Minuten) wurde das restliche Monomergemisch innerhalb von 3,5 Stunden zudosiert, wobei gleichzeitig eine Lösung von 0,06 Teilen Ammoniumperoxodisulfat in 5,7 Teilen Wasser parallel dosiert wurde. Die Reaktionstemperatur wurde während dieser Zeit bei 70 bis 72 °C gehalten. Nach dem Ende der Zuläufe wurden 0,06 Teile Ammoniumperoxodisulfat in 5,7 Teilen Wasser zugesetzt und anschließend bis ca. 90 °C 1 Stunde nachpolymerisiert. Zur Reduktion der Restmonomeren wurde in der Abkühlphase durch Zusatz von 0,1 Teilen 30 %-igem Wasserstoffperoxid (bei 80 °C) und 0,26 Teilen Ascorbinsäure (bei 75 °C) nachpolymerisiert. Man erhielt eine Koagulat-freie Dispersion vom Feststoffgehalt 45 %, einem Restvinylacetatgehalt von 0,07 % und einer Viskosität von 21.800 mPa·s (Brookfield RVT, Spindel 6, 20 U/Min., 23 °C). Der pH-Wert lag bei 2,5.

### Dispersion B

Die Herstellung erfolgte analog Dispersion A mit dem Unterschied, dass als Schutzkolloide statt 3,5 Teilen ®Mowiol 40-88 und 3,5 Teilen ®Mowiol 26-88 nun 3,5 Teile ®Mowiol 40-88, 3,25 Teilen ®Mowiol 26-88 und 0,25 Teile ®Tylose H20 (niedermolekulare Hydroxyethylcellulose der Firma Shin-Etsu Chemical Co., Ltd.) verwendet wurden. Man erhielt eine Koagulat-freie Dispersion vom Feststoffgehalt 45 %, einem Restvinylacetatgehalt von 0,11 % und einer Viskosität von 21.700 mPa·s (Brookfield RVT, Spindel 6, 20 U/Min., 23 °C). Der pH-Wert lag bei 2,5.

### Dispersion C

Die Herstellung erfolgte analog Dispersion A mit dem Unterschied, dass als Schutzkolloide statt 3,5 Teilen ®Mowiol 40-88 und 3,5 Teilen ®Mowiol 26-88 nun 5,0 Teile ®Mowiol 26-88 und 2,0 Teile ®Tylose H20 verwendet wurden. Man erhielt eine Koagulat-freie Dispersion vom Feststoffgehalt 45 %, einem Restvinylacetatgehalt von 0,09 % und einer Viskosität von 24.400 mPa·s (Brookfield RVT, Spindel 6, 20 U/Min., 23 °C). Der pH-Wert lag bei 2,5.

### Dispersion D

Die Herstellung erfolgte analog Dispersion A mit dem Unterschied, dass als Schutzkolloide statt 3,5 Teilen ®Mowiol 40-88 und 3,5 Teilen ®Mowiol 26-88 nun 5,0 Teile ®Mowiol 26-88 und 2,0 Teile ®Tylose C30 (niedermolekulare Natrium-Carboxymethylcellulose der Firma Shin-Etsu Chemical Co., Ltd.) verwendet wurden. Man erhielt eine Koagulat-freie Dispersion vom Feststoffgehalt 45 %, einem Restvinylacetatgehalt von 0,18 % und einer Viskosität von 11.500 mPa·s (Brookfield RVT, Spindel 6, 20 U/Min., 23 °C). Der pH-Wert lag bei 3,9.

### Bestimmung der Natamycin-Wiederfindungsrate mittels HPLC

Folgende Methode wurde verwendet, um den Gehalt an aktivem Natamycin in den nachfolgend beschriebenen Beispielen zu bestimmen:

0,2 - 1 g der Dispersionsprobe wurden in einen 50 ml Meßkolben genau eingewogen und mit Methanol zur Marke aufgefüllt. Die Probe wurde gut geschüttelt und 15 min im Ultraschallbad behandelt. Dann wurde die Probe 20 Min. bei 15500 Upm zentrifugiert. Die HPLC-Bestimmung erfolgte mittels der Säule Partisil 5 C8 als stationärer Phase und 80 Methanol / 20 Wasser / 1 Essigsäure als mobiler Phase. Das Injektionsvolumen betrug 5 µl. Der Standard bestand aus ®Delvocid der Firma DSM Food Specialities (besteht aus 50 % aktivem Natamycin). Die Detektion erfolgte mittels UV bei 303 nm im Konzentrationsbereich von 2-10 mg/l gegen den reinen Standard (Konzentration 2 mg/l).

### Bestimmung der Ascorbinsäurekonzentration

Diese erfolgte mit Merckoquant Teststäbchen der Firma Merck (Laut Herstellerangaben liegt der bestimmbare Konzentrationsbereich zwischen 50 - 2000 mg/l)

### Beispiel 1

Dispersion A wurde mit 15 %iger Kalilauge auf einen pH-Wert von 4,8 eingestellt und mit 200 mg Ascorbinsäure pro kg Dispersion versetzt. Die Bestimmung der Ascorbinsäurekonzentration ergab einen Wert von 200 ppm.

### Beispiel 2

Dispersion B wurde mit 15 %-iger Kalilauge auf einen pH-Wert von 4,8 eingestellt und mit 200 mg Ascorbinsäure pro kg Dispersion versetzt. Die Bestimmung der Ascorbinsäurekonzentration ergab einen Wert von 200 ppm.

### Beispiel 3

Dispersion A wurde mit 15 %-iger Kalilauge auf einen pH-Wert von 4,8 eingestellt. Es wurde kein Antioxidans zugesetzt.

### Beispiel 4

Dispersion B wurde mit 15 %-iger Kalilauge auf einen pH-Wert von 4,8 eingestellt. Es wurde kein Antioxidans zugesetzt.

### Vergleichsbeispiel V1

Dispersion C wurde mit 15 %iger Kalilauge auf einen pH-Wert von 4,8 eingestellt. Es wurde kein Antioxidans zugesetzt.

### Vergleichsbeispiel V2

Dispersion C wurde mit 15 %iger Kalilauge auf einen pH-Wert von 4,8 eingestellt und mit 200 mg Ascorbinsäure pro kg Dispersion versetzt. Die Bestimmung der Ascorbinsäurekonzentration ergab einen Wert von 200 ppm.

### Vergleichsbeispiel V3

Dispersion D wurde mit 15 %iger Kalilauge auf einen pH-Wert von 4,8 eingestellt. Es wurde kein Antioxidans zugesetzt.

Von allen Beispielen und Vergleichsbeispielen wurde die Natamycin-Wiederfindungsrate bestimmt. Diese wurde als Doppelbestimmung ausgeführt. Hierzu wurden jeweils zwei aliquote Teile der Produkte entnommen und mit je 300 ppm einer wässrigen Suspension von Natamycin mit einer Einwegpipette unter Rühren versetzt. Zur Bestimmung der prozentualen Wiederfindungsrate wurde zunächst unmittelbar nach dem Zusatz von Natamycin an jeder Probe dessen Startkonzentration bestimmt. Dann wurden die Proben einer einwöchigen Wärmelagerung bei 40 °C im Wärmeschrank unterzogen und die Endkonzentration ermittelt. Die prozentualen Wiederfindungsraten sind in Form der Mittelwerte aus den Doppelbestimmungen angegeben (Genauigkeit +/- 1 %) und finden sich in der nachfolgenden Tabelle.

| Beispiel | pH-Wert | Celluloseether [% auf Monomer] | Ascorbinsäure-Konz. [ppm] | Natamycin Wiederfindung 7 d 40°C [%] |
|---|---|---|---|---|
| 1 | 4,8 | - | 200 | 94 |
| 2 | 4,8 | - | - | 89 |
| 3 | 4,8 | 0,25 % HEC | 200 | 97 |
| 4 | 4,8 | 0,25 % HEC | - | 90 |
| V1 | 4,8 | 2 % HEC | - | 84 |
| V2 | 4,8 | 2 % HEC | 200 | 91 |
| V3 | 4,8 | 2 % NaCMC | - | 80 |

Die erfindungsgemäßen Beispiele 1 und 3 der Variante I der Zusammensetzung mit reduzierten Anteilen an Celluloseether und nachgegebener Ascorbinsäure ergeben Wiederfindungsraten von deutlich oberhalb 90 %.

Die erfindungsgemäßen Beispiele 2 und 4 der Variante II der Zusammensetzung, welche kein stabilisierendes Antioxidans aufweisen, ergeben ebenfalls hohe Wiederfindungsraten.

Die nicht erfindungsgemäßen Vergleichsbeispiele V1 bis V3 verdeutlichen den negativen Einfluss hoher Anteile von Celluloseether auf die Wiederfindungsraten, welche mit verringertem Anteil dieser Komponente höher werden.

## Patentansprüche

1. Wässrige Polymerdispersion, die auf einen pH-Bereich von 4 bis 6 eingestellt ist, enthaltend
A) 100 Gewichtsteile eines durch Emulsionspolymerisation hergestellten Homo- oder Copolymerisats,
B) 0,1 bis 15 Gewichtsteile, bezogen auf die Gesamtmenge der eingesetzten Monomeren, mindestens eines Schutzkolloids,
C) 0,1 bis 10 Gewichtsteile, bezogen auf die Gesamtmenge der eingesetzten Monomeren, mindestens eines nichtionischen Emulgators,
D) 10 bis 990 Gewichts-ppm, bezogen auf die Masse der gesamten Dispersion, mindestens eines Antioxidationsmittels, und
E) mindestens ein Polyen-Fungizid,
mit der Maßgabe, dass das Schutzkolloid keinen oder bis zu 0,45 Gewichtsteile, bezogen auf die Gesamtmenge der eingesetzten Monomeren, Celluloseether aufweist.

2. Wässrige Polymerdispersion, die auf einen pH-Bereich von 4,5 bis 5,5 eingestellt ist, enthaltend
A) 100 Gewichtsteile eines durch Emulsionspolymerisation hergestellten Homo- oder Copolymerisats,
B) 0,1 bis 15 Gewichtsteile, bezogen auf die Gesamtmenge der eingesetzten Monomeren, mindestens eines Schutzkolloids,
C) 0,1 bis 10 Gewichtsteile, bezogen auf die Gesamtmenge der eingesetzten Monomeren, mindestens eines nichtionischen Emulgators, und
E) mindestens ein Polyen-Fungizid,
mit der Maßgabe, dass die Polymerdispersion frei von Antioxidationsmittel ist und dass das Schutzkolloid keinen oder bis zu 0,45 Gewichtsteile, bezogen auf die Gesamtmenge der eingesetzten Monomeren, Celluloseether aufweist.

3. Wässrige Polymerdispersion nach einem der Ansprüche 1 oder 2, **dadurch gekennzeichnet, dass** Komponente B) höchstens 0,3 Gewichtsteile, bezogen auf die Gesamtmenge der eingesetzten Monomeren, an Celluloseether aufweist, bevorzugt keinen Celluloseether.

4. Wässrige Polymerdispersion nach Anspruch 1, **dadurch gekennzeichnet, dass** die Menge an Komponente D) 50 bis 900 ppm, bevorzugt 100 bis 500 ppm und besonders bevorzugt 100 bis 350 ppm, bezogen auf die Masse der gesamten Dispersion, beträgt.

5. Wässrige Polymerdispersion nach einem der Ansprüche 1 oder 2, **dadurch gekennzeichnet, dass** Komponente A) sich ableitet von Homo-oder Copolymerisaten ausgewählt aus der Gruppe bestehend aus
A1) Copolymerisat aus Vinylestern von aliphatischen, gesättigten Carbonsäuren, vorzugsweise Fettsäuren mit einer Kettenlänge von C₁-C₁₈, und Maleinsäureestern und/oder Fumarsäureestern von einwertigen aliphatischen Alkoholen mit einer Kettenlänge von C₁-C₁₈,
A2) Homo- oder Copolymerisat aus Vinylestern von aliphatischen, gesättigten Carbonsäuren, vorzugsweise Fettsäuren mit einer Kettenlänge von C₁-C₁₈,
A3) Copolymerisat aus Vinylestern von aliphatischen, gesättigten Carbonsäuren, vorzugsweise Fettsäuren mit einer Kettenlänge von C₁-C₁₈ und alpha-Olefinen mit 2 bis 8 C-Atomen, insbesondere Ethylen, und
A4) Homo-oder Copolymerisat von (Meth-)acrylsäurealkylestern mit 1 bis 18 Kohlenstoffatomen in der Alkylkette, oder ein Copolymerisat dieser (Meth)-acrylsäurealkylester mit beliebigen Kombinationen der unter A1) bis A3) genannten Monomeren.

6. Wässrige Polymerdispersion nach Anspruch 5, **dadurch gekennzeichnet, dass** Komponente A) ein Copolymerisat der Gruppe A1) enthält.

7. Wässrige Polymerdispersion nach Anspruch 6, **dadurch gekennzeichnet, dass** Komponente A) sich von einem Vinylester aliphatischer Fettsäuren ableitet, bevorzugt von Vinylacetat.

8. Wässrige Polymerdispersion nach einem der Ansprüche 1 oder 2, **dadurch gekennzeichnet, dass** Komponente B) Polyvinylalkohol enthält.

9. Wässrige Polymerdispersion nach einem der Ansprüche 1 oder 2, **dadurch gekennzeichnet, dass** Komponente C) Acyl-, Alkyl-, Oleyl- und/oder Alkylaryloxethylate enthält.

10. Wässrige Polymerdispersion nach einem der Ansprüche 1 oder 2, **dadurch gekennzeichnet, dass** diese neben nichtionischen Emulgatoren C) keine weiteren ionischen Emulgatoren enthält.

11. Wässrige Polymerdispersion nach Anspruch 1, **dadurch gekennzeichnet, dass** Komponente D) ausgewählt wird aus der Gruppe bestehend aus Ascorbinsäure, Isoascorbinsäure, Weinsäure, Zitronensäure, Alkali- oder Erdalkalisalzen dieser Säuren, Gluconsäure, Ascorbylpalmitat, Ascorbylstearat, Butylhydroxyanisol, Butylhydroxytoluol, alpha-Tocopherol, gamma-Tocopherol, delta-Tocopherol, Retinol, Propyl-, Octyl- oder Dodecylgallat oder Gemischen aus zwei oder mehreren dieser Verbindungen.

12. Wässrige Polymerdispersion nach einem der Ansprüche 1 oder 2, **dadurch gekennzeichnet, dass** diese als Komponente E) Natamycin enthält.

13. Wässrige Polymerdispersion nach einem der Ansprüche 1 oder 2, **dadurch gekennzeichnet, dass** die Menge an Komponente E) 100 bis 500 ppm, bevorzugt 100 bis 400 ppm und besonders bevorzugt 150 bis 350 ppm, bezogen auf die Masse der gesamten Dispersion, beträgt.

14. Wässrige Polymerdispersion, die auf einen pH-Bereich von 4 bis 6 eingestellt ist, enthaltend
A) 100 Gewichtsteile eines durch Emulsionspolymerisation hergestellten Homo- oder Copolymerisats,
B) 0,1 bis 15 Gewichtsteile, bezogen auf die Gesamtmenge der eingesetzten Monomeren, mindestens eines Schutzkolloids,
C) 0,1 bis 10 Gewichtsteile, bezogen auf die Gesamtmenge der eingesetzten Monomeren, mindestens eines nichtionischen Emulgators, und
D) 1 0 bis 990 Gewichts-ppm, bezogen auf die Masse der gesamten Dispersion, mindestens eines Antioxidationsmittels,
mit der Maßgabe, dass das Schutzkolloid keinen oder bis zu 0,45 Gewichtsteile, bezogen auf die Gesamtmenge der eingesetzten Monomeren, Celluloseether aufweist.

15. verfahren zur Herstellung von wässrigen Polymerdispersionen nach Anspruch 1 umfassend die Schritte:
i) radikalische Emulsionspolymerisation mindestens eines ethylenisch ungesättigten Monomeren zur Herstellung eines Homo- oder Copolymerisats A), in Gegenwart von
ii) 0,1 bis 15 Gewichtsteilen, vorzugsweise 0,2 bis 10 Gewichtsteilen, mindestens eines Schutzkolloids, vorzugsweise Polyvinylalkohol, und
iii) 0,1 bis 10 Gewichtsteilen, vorzugsweise 0,1 bis 3,0 Gewichtsteilen, mindestens eines nichtionischen Emulgators,
iv) gegebenenfalls Zugabe mindestens eines Antioxidationsmittels in einer Menge, dass die Konzentration an Antioxidationsmittel in der Polymerdispersion 10 - 990 Gewichts-ppm, bezogen auf die Masse der gesamten Dispersion, beträgt,
v) gegebenenfalls Einstellen der erhaltenen wässrigen Polymerdispersion auf einen pH-Bereich zwischen 4 und 6,
vi) gegebenenfalls Zugabe von weiteren für die Beschichtung von Lebensmitteln geeigneten Zusätzen F), und
vii) Zugabe von Polyen-Fungizid E),
mit der Maßgabe, dass das verwendete Schutzkolloid keinen oder bis zu 0,45 Gewichtsteile, bezogen auf die Gesamtmenge der eingesetzten Monomeren, Celluloseether aufweist.

16. Verfahren zur Herstellung von wässrigen Polymerdispersionen nach Anspruch 2 umfassend die Schritte:
i) radikalische Emulsionspolymerisation mindestens eines ethylenisch ungesättigten Monomeren zur Herstellung eines Homo- oder Copolymerisats A), in Gegenwart von
ii) 0,1 bis 15 Gewichtsteilen, vorzugsweise 0,2 bis 10 Gewichtsteilen, mindestens eines Schutzkolloids B), vorzugsweise Polyvinylalkohol, und
iii) 0,1 bis 10 Gewichtsteilen, vorzugsweise 0,1 bis 3,0 Gewichtsteilen, mindestens eines nichtionischen Emulgators C),
iv) gegebenenfalls Zugabe mindestens eines Antioxidationsmittels in einer Menge, dass der Gehalt an nicht umgesetzten Monomeren und/oder an oxidierenden Komponenten in der in der Polymerdispersion unter Abbau der Menge an Antioxidationsmittel verringert wird,
v) gegebenenfalls Einstellen der erhaltenen wässrigen Polymerdispersion auf einen pH-Bereich zwischen 4,5 und 5,5,
vi) gegebenenfalls Zugabe von weiteren für die Beschichtung von Lebensmitteln geeigneten Zusätzen F), und
vii) Zugabe von Polyen-Fungizid E),
mit der Maßgabe, dass die Menge an Antioxidationsmittel so gewählt wird, dass die Polymerdispersion nach Durchführung von Schritt iv) frei von Antioxidationsmitteln ist, und dass das verwendete Schutzkolloid keinen oder bis zu 0,45 Gewichtsteile, bezogen auf die Gesamtmenge der eingesetzten Monomeren, Celluloseether aufweist.

17. Verwendung der wässrigen Polymerdispersion nach einem der Ansprüche 1 oder 2 zum Beschichten und/oder Verpacken von Lebensmitteln, vorzugsweise zum Beschichten von Käse.

18. Verwendung der wässrigen Polymerdispersion nach Anspruch 16 zum Beschichten und/oder Verpacken von Lebensmitteln, vorzugsweise zum Beschichten von Käse.

## Claims

1. An aqueous polymer dispersion, set to a pH range of from 4 to 6, containing
A) 100 parts by weight of a homopolymer or copolymer produced by emulsion polymerization,
B) from 0.1 to 15 parts by weight, based on the total amount of monomers used, of at least one protective colloid,
C) from 0.1 to 10 parts by weight, based on the total amount of monomers used, of at least one non-ionic emulsifier,
D) from 10 to 990 ppm, by weight of the total weight of the dispersion, of at least one antioxidant, and
E) at least one polyene fungicide,
provided that the protective colloid contains no cellulose ether or contains up to 0.45 part by weight, based on the total amount of monomers used, of cellulose ether

2. An aqueous polymer dispersion, set to a pH range of from 4.5 to 5,5, containing
A) 100 parts by weight of a homopolymer or copolymer produced by emulsion polymerization,
B) from 0.1 to 15 parts by weight, based on the total amount of monomers used, of at least one protective colloid.
C) from 0.1 to 10 parts by weight, based on the total amount of monomers used, of at least one non-ionic emulsifier, and
E) at least one polyene fungicide,
provided that the polymer dispersion is free from antioxidant and that the protective colloid contains no cellulose ether or contains up to 0.45 part by weight, based on the total amount of monomers used of cellulose ether.

3. The aqueous polymer dispersion as defined in claim 1 or claim 2, **characterized in that** component B) contains not more than 0.3 part by weight, based on the total amount of monomers used, of cellulose ether, preferably no cellulose ether.

4. The aqueous polymer dispersion as defined in claim 1, **characterized in that** the concentration of component D) is from 50 to 900 ppm, preferably from 100 to 500 ppm and more preferably from 100 to 350 ppm, by weight of the total weight of the dispersion.

5. The aqueous polymer dispersion as defined in claim 1 or claim 2, **characterized in that** component A) is derived from homopolymers or copolymers selected from the group consisting of
A1) a copolymer of vinyl esters of aliphatic, saturated carboxylic acids, preferably fatty acids having a chain length of C₁-C₁₈, and maleic esters and/or fumaric esters of monohydric aliphatic alcohols having a chain length of C₁-C₁₈,
A2) a homopolymer or copolymer of vinyl esters of aliphatic, saturated carboxylic acids, preferably fatty acids having a chain length of C₁-C₁₈,
A3) a copolymer of vinyl esters of aliphatic, saturated carboxylic acids, preferably fatty acids having a chain length of C₁-C₁₈ and alpha olefins containing from 2 to 8 carbons, particularly ethylene, and
A4) a homopolymer or copolymer of alkyl (meth)acrylates containing from 1 to 18 carbons in the alkyl chain, or a copolymer of these alkyl (meth)acrylates with arbitrary combinations of the monomers specified under A1) to A3).

6. The aqueous polymer dispersion as defined in claim 5, **characterized in that** component A) contains a copolymer in group A1).

7. The aqueous polymer dispersion as defined in claim 6, **characterized in that** component A) is derived from a vinyl ester of an aliphatic fatty acid, preferably vinyl acetate.

8. The aqueous polymer dispersion as defined in claim 1 or claim 2, **characterized in that** component B) contains polyvinyl alcohol.

9. The aqueous polymer dispersion as defined in claim 1 or claim 2, **characterized in that** component C) contains acyl ethoxylates, alkyl ethoxylates, oleyl ethoxylates, and/or alkylaryl ethoxylates.

10. The aqueous polymer dispersion as defined in claim 1 or claim 2, **characterized in that** it contains no ionic emulsifiers in addition to the non-ionic emulsifiers C).

11. The aqueous polymer dispersion as defined in claim 1, **characterized in that** component D) is selected from the group consisting of ascorbic acid, D-araboascorbic acid, tartaric acid, citric acid, alkali metal salts or alkaline earth metal salts of these acids, gluconic acid, ascorbyl palmitate, ascorbyl stearate, butylated hydroxyanisole, butyl hydroxytoluene, alpha-tocopherol, gamma-tocopherol, delta-tocopherol, retinol, propyl gallate, octyl gallate, dodecyl gallate, or mixtures of two or more of these compounds.

12. The aqueous polymer dispersion as defined in claim 1 or claim 2, **characterized in that** it contains natamycine as component E).

13. The aqueous polymer dispersion as defined in claim 1 or claim 2, **characterized in that** the concentration of component E) is from 100 to 500 ppm, preferably from 100 to 400 ppm and more preferably from 150 to 350 ppm, based on the total weight of the dispersion.

14. An aqueous polymer dispersion, set to a pH range of from 4 to 6, containing
A) 100 parts by weight of a homopolymer or copolymer produced by emulsion polymerization,
B) from 0.1 to 15 parts by weight, based on the total amount of monomers used, of at least one protective colloid,
C) from 0.1 to 10 parts by weight, based on the total amount of monomers used, of at least one non-ionic emulsifier, and
D) from 10 to 990 ppm, by weight, based on the total weight of the dispersion, of at least one antioxidant,
provided that the protective colloid contains no cellulose ether or contains up to 0.45 part by weight, based on the total amount of monomers used, of cellulose ether.

15. A process for the preparation of an aqueous polymer dispersion as defined in claim 1, comprising the following steps:
i) performing free radical emulsion polymerization of at least one ethylenically unsaturated monomer to produce a homopolymer or copolymer A), in the presence of
ii) from 0.1 to 15 parts by weight and preferably from 0.2 to 10 parts by weight of at least one protective colloid, preferably polyvinyl alcohol, and
iii) from 0.1 to 10 parts by weight and preferably from 0.1 to 3.0 parts by weight of at least one non-ionic emulsifier,
iv) optionally adding at least one antioxidant in an amount such that the concentration of antioxidant in the polymer dispersion is from 10 ppm to 990 ppm, by weight of the total weight of the dispersion,
v) optionally adjusting the resulting aqueous polymer dispersion to a pH ranging from 4 to 6,
vi) optionally adding other additives F) suitable for coating foodstuffs, and
vii) adding polyene fungicide E),
provided that the protective colloid used contains no cellulose ether or contains up to 0.45 part by weight, based on the total amount of monomers used, of cellulose ether.

16. A process for the preparation of an aqueous polymer dispersion as defined in claim 2, comprising the following steps:
i) performing free radical emulsion polymerization of at least one ethylenically unsaturated monomer to produce a homopolymer or copolymer A), in the presence of
ii) from 0.1 to 15 parts by weight and preferably from 0.2 to 10 parts by weight of at least one protective colloid B), preferably polyvinyl alcohol, and
iii) from 0.1 to 10 parts by weight and preferably from 0.1 to 3.0 parts by weight of at least one non-ionic emulsifier C),
iv) optionally adding at least one antioxidant in an amount such that the content of unconverted monomers and/or oxidative components in the polymer dispersion is reduced with reduction of the concentration of antioxidant,
v) optionally adjusting the resultant aqueous polymer dispersion to a pH ranging from 4.5 to 5.5,
vi) optionally adding other additives F) suitable for coating foodstuffs, and
vii) adding polyene fungicide E), provided that the amount of antioxidant used is selected such that the polymer dispersion is free from antioxidants following execution of step iv) and the protective colloid used contains no cellulose ether or contains up to 0.45 part by weight, based on the total amount of monomers used, of cellulose ether.

17. The use of the aqueous polymer dispersion as defined in claim 1 or claim 2 for coating and/or packaging foodstuffs, preferably for coating cheese.

18. The use of the aqueous polymer dispersion as defined in claim 16 for coating and/or packaging foodstuffs, preferably for coating cheese.

## Revendications

1. Dispersion aqueuse de polymère ajustée à un pH dans la plage de pH 4 à pH6. contenant
A) 100 parties en poids d'un homo- ou copolymère produit par polymérisation en émulsion,
B) 0,1 à 15 parties en poids, ramené à la quantité totale des monomères utilisés, d'au moins un colloïde protecteur,
C) 0,1 à 10 parties en poids, ramené à la quantité totale des monomères utilisés, d'au moins un agent émulsifiant non ionique,
D) 10 à 990 ppm en poids, ramené à la masse totale de la dispersion, d'au moins un agent antioxydant, et
E) au moins un fongicide à base de polyène,
à la condition que le colloïde protecteur ne contienne pas ou contienne jusqu'à 0,45 partie en poids, ramené à la quantité totale des monomères utilisés, d'éther de cellulose.

2. Dispersion aqueuse de polymère ajustée à un pH dans la plage de pH 4,5 à pH 5,5, contenant
A) 100 parties en poids d'un homo- ou copolymère produit par polymérisation en émulsion,
B) 0,1 à 15 parties en poids, ramené à la quantité totale des monomères utilisés, d'au moins un colloïde protecteur,
C) 0,1 à 10 parties en poids, ramené à la quantité totale des monomères utilisés, d'au moins un agent émulsifiant non ionique, et
E) au moins un fongicide à base de polyène,
à la condition que la dispersion de polymère soit dépourvue d'agent antioxydant et que le colloïde protecteur ne contienne pas ou contienne jusqu'à 0,45 partie en poids, ramené à la quantité totale des monomères utilisés, d'éther de cellulose.

3. Dispersion aqueuse de polymère selon l'une des revendications 1 ou 2, **caractérisée en ce que** le composant B) contient au maximum 0,3 partie en poids, ramené à la quantité totale des monomères utilisés, d'éther de cellulose, de préférence ne contient pas d'éther de cellulose.

4. Dispersion aqueuse de polymère selon la revendication 1, **caractérisée en ce que** la quantité de composant D) va de 50 à 900 ppm, de préférence de 100 à 500 ppm et de façon particulièrement préférée de 100 à 350 ppm, ramenée à la masse totale de la dispersion.

5. Dispersion aqueuse de polymère selon l'une des revendications 1 ou 2. **caractérisée en ce que** le composant A) est dérivé d'homo- ou copolymères choisis dans le groupe constitué par:
A1) copolymère d'esters vinyliques d'acides carboxyliques aliphatiques saturés, de préférence des acides gras ayant une longueur de chaîne de C₁ à C₁₈, et d'esters maléiques et/ou fumariques d'alcools aliphatiques monovalents ayant une longueur de chaîne de C₁ à C_{18,}
A2) homo- ou copolymère d'esters vinyliques d'acides carboxyliques aliphatiques saturés, de préférence des acides gras ayant une longueur de chaîne de C₁ à C₁₈,
A3) copolymère d'esters vinyliques d'acides carboxyliques aliphatiques saturés, de préférence des acides gras ayant une longueur de chaîne de C₁ à C₁₈, et d'alpha-oléfines de 2 à 8 atomes de carbone, en particulier l'éthylène, et
A4) homo- ou copolymère d'esters alkyliques de l'acide (méth)acrylique avec 1 à 18 atomes de carbone dans la chaîne alkyle, ou un copolymère de ces esters alkyliques de l'acide (méth)acrylique avec des combinaisons quelconques des monomères cités en A1) à A3).

6. Dispersion aqueuse de polymère selon la revendication 5, **caractérisée en ce que** le composant A) contient un copolymère du groupe A1).

7. Dispersion aqueuse de polymère selon la revendication 6, **caractérisée en ce que** le composant A) est dérivé d'un ester vinylique d'acides gras aliphatiques de préférence de l'acétate de vinyle.

8. Dispersion aqueuse de polymère selon l'une des revendications 1 ou 2. **caractérisée en ce que** le composant B) contient de l'alcool polyvinylique.

9. Dispersion aqueuse de polymère selon l'une des revendications 1 ou 2, **caractérisée en ce que** le composant C) contient des éthoxylates d'acyle, alkyle, oléyle et/ou alkylaryle.

10. Dispersion aqueuse de polymère selon l'une des revendications 1 ou 2. **caractérisée en ce que**, en dehors de l'agent émulsifiant non ionique C), elle ne contient pas d'autres agents émulsifiants ioniques.

11. Dispersion aqueuse de polymère selon la revendication 1, **caractérisée en ce que** le composant D) est choisi dans le groupe constitué par l'acide ascorbique, l'acide isoascorbique, l'acide tartrique, l'acide citrique, des sels de métaux alcalins ou alcalino-terreux de ces acides, l'acide gluconique, le palmitate d'ascorbyle, le stéarate d'ascorbyle, le butylhydroxyanisole, le butylhydroxytoluène, l'alpha-tocophérol, le gamma-tocophérol, le delta-tocophéroil le rétinol, le gallate de propyle, octyle ou dodécyle, ou des mélanges de deux ou plusieurs de ces composés.

12. Dispersion aqueuse de polymère selon l'une des revendications 1 ou 2. **caractérisée en ce qu'**elle contient comme composant E) de la natamycine.

13. Dispersion aqueuse de polymère selon l'une des revendications 1 ou 2, **caractérisée en ce que** la quantité de composant E) va de 100 à 500 ppm, de préférence de 100 à 400 ppm et de façon particulièrement préférée de 150 à 350 ppm, ramenée à la masse totale de la dispersion.

14. Dispersion aqueuse de polymère ajustée à un pH dans la plage de pH 4 à pH 6, contenant
A) 100 parties en poids d'un homo- ou copolymère produit par polymérisation en émulsion,
B) 0,1 à 15 parties en poids, ramené à la quantité totale des monomères utilisés, d'au moins un colloïde protecteur,
C) 0,1 à 10 parties en poids, ramené à la quantité totale des monomères utilisés, d'au moins un agent émulsifiant non ionique, et
D) 10 à 990 ppm en poids, ramené à la masse totale de la dispersion, d'au moins un agent antioxydant,
à la condition que le colloïde protecteur ne contienne pas ou contienne jusqu'à 0,45 partie en poids, ramené à la quantité totale des monomères utilisés, d'éther de cellulose.

15. Procédé de préparation de dispersions aqueuses de polymères selon la revendication 1, comprenant les étapes suivantes :
i) polymérisation radicalaire en émulsion d'au moins un monomère éthyléniquement insaturé afin de produire un homo- ou copolymère A), en présence de
ii) 0,1 à 15 parties en poids, de préférence 0,2 à 10 parties en poids, d'au moins un colloïde protecteur, de préférence de l'alcool polyvinylique, et
iii) 0,1 à 10 parties en poids, de préférence 0,1 à 3,0 parties en poids, d'au moins un agent émulsifiant non ionique,
iv) le cas échéant ajout d'au moins un agent antioxydant en une quantité telle que la concentration en agent antioxydant dans la dispersion de polymère soit comprise entre 10 et 990 ppm en poids, ramené à la masse totale de la dispersion.
v) le cas échéant ajustement de la dispersion aqueuse de polymère ainsi obtenue à un pH dans la plage de pH 4 à pH 6,
vi) le cas échéant ajout d'autres additifs F) appropriés pour l'enrobage de produits alimentaires, et
vii) ajout de fongicide à base de polyène E),
à la condition que le colloïde protecteur utilisé ne contienne pas ou contienne jusqu'à 0,45 partie en poids, ramené à la quantité totale des monomères utilisés, d'éther de cellulose.

16. Procédé de préparation de dispersions aqueuses de polymères selon la revendication 2, comprenant les étapes suivantes :
i) polymérisation radicalaire en émulsion d'au moins d'un monomère éthyléniquement insaturé afin de produire un homo- ou copolymère A), en présence de
ii) 0,1 à 15 parties en poids, de préférence 0,2 à 10 parties en poids, d'au moins un colloïde protecteur B), de préférence de l'alcool polyvinylique, et
iii) 0,1 à 10 parties en poids, de préférence 0,1 à 3,0 parties en poids, d'au moins un agent émulsifiant non ionique C),
iv) le cas échéant ajout d'au moins un agent antioxydant en une quantité telle que la teneur en monomère n'ayant pas réagi et/ou en composants oxydants dans la dispersion de polymère diminue avec la dégradation de la quantité d'agent antioxydant,
v) le cas échéant ajustement de la dispersion aqueuse de polymère ainsi obtenue à un pH dans la plage de pH 4,5 et pH 5,5,
vi) le cas échéant ajout d'autres additifs F) appropriés pour l'enrobage de produits alimentaires, et
vii) ajout de fongicide à base de polyène E).
à la condition que la quantité d'agent antioxydant soit choisie de telle façon que la dispersion de polymère soit dépourvue d'agents antioxydants après la réalisation de l'étape iv) et que le colloïde protecteur utilisé ne contienne pas ou contienne jusqu'à 0,45 partie en poids, ramené à la quantité totale des monomères utilisés, d'éther de cellulose.

17. Utilisation de la dispersion aqueuse de polymère selon l'une des revendications 1 ou 2 pour enrober et/ou emballer des produits alimentaires, de préférence pour enrober du fromage.

18. Utilisation de la dispersion aqueuse de polymère selon la revendication 16 pour enrober et/ou emballer des produits alimentaires, de préférence pour enrober du fromage.
